(19) Europäisches Patentamt / European Patent Office / Office européen des brevets

(11) **EP 4 269 502 A1**

(12) **EUROPEAN PATENT APPLICATION**
published in accordance with Art. 153(4) EPC

(43) Date of publication:
**01.11.2023 Bulletin 2023/44**

(21) Application number: **21915597.5**

(22) Date of filing: **10.12.2021**

(51) International Patent Classification (IPC):
**C08L 77/00** (2006.01)   **C08L 23/26** (2006.01)
**C08K 5/00** (2006.01)   **F17C 1/16** (2006.01)

(52) Cooperative Patent Classification (CPC):
**C08K 5/00; C08L 23/26; C08L 77/00; F17C 1/16;**
Y02E 60/32

(86) International application number:
**PCT/KR2021/018809**

(87) International publication number:
**WO 2022/145799 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2020 KR 20200186228**

(71) Applicant: **Kolon Plastics, Inc.**
**Gyeongsangbuk-do 39537 (KR)**

(72) Inventors:
• KIM, Jae Min
  Gimcheon-si Gyeongsangbuk-do 39537 (KR)
• JEONG, Heonkyu
  Gimcheon-si Gyeongsangbuk-do 39537 (KR)
• JUNG, Ki Bong
  Gimcheon-si Gyeongsangbuk-do 39537 (KR)

(74) Representative: **Ter Meer Steinmeister & Partner Patentanwälte mbB**
**Nymphenburger Straße 4**
**80335 München (DE)**

(54) **POLYAMIDE RESIN COMPOSITION FOR HYDROGEN TANK LINER AND PRODUCT PREPARED BY SAME**

(57)   Provided is a polyamide resin composition for a hydrogen tank liner, comprising: (a) a base resin including a first polyamide and a second polyamide; (b) an impact resistant material; (c) an antioxidant; and (d) a release agent, wherein the first polyamide is an aliphatic polyamide, and the second polyamide is an aliphatic polyamide having more carbon atoms per amide group in a polyamide repeating unit than the first polyamide.

## FIG. 1

Polyamide 6

Processed by Luminess, 75001 PARIS (FR)

**Description**

**[Technical Field]**

The present invention relates to a polyamide resin composition for a hydrogen tank liner and a product prepared by the same.

**[Background Art]**

Recently, automobile industries have been developing in a direction of utilizing eco-friendly energy such as hybrid vehicles (internal combustion + electric battery), electric vehicles, and the like. At the same time, hydrogen cars using hydrogen as an energy source also have been drawing lots of attention as eco-friendly cars. Since the hydrogen cars use hydrogen as a fuel, which is at risk of explosion, a hydrogen tank that can store hydrogen and many other parts require high-level technology to ensure safety and functionality. Each part requires various properties such as high rigidity, heat resistance, high gloss, mechanical strength at low temperatures depending on its function, application location, and the like.

Among the parts of the hydrogen cars, the hydrogen tank may have four types of pressure vessels, of which the type 4 is composed of a plastic liner on the inside and carbon fiber on the outside. Accordingly, the hydrogen tank requires high rigidity capable of withstanding high-pressure hydrogen and durability capable of maintaining performance even when repeatedly filled with the hydrogen.

Due to these part properties, the plastic liner requires tensile elongation capable of withstanding the high-pressure hydrogen, durability under a low temperature condition where the hydrogen is repeatedly charged, and hydrogen barrier properties to block gas permeation. Materials for the plastic hydrogen tank liner should have excellent basic tensile elongation, excellent tensile elongation at a low temperature, and excellent hydrogen barrier properties.

However, since it is difficult to satisfy excellent tensile elongation and hydrogen barrier properties and simultaneously, implement excellent tensile elongation at a low temperature required of the plastic hydrogen tank liner, these properties are still in need of improvement.

[Prior art document]

[patent document]

Japanese Patent Laid-Open Publication No. 2009-191871

**[Disclosure]**

[Technical Problem]

The present invention has been made to solve the above-mentioned problems of the prior art, and provides a polyamide resin composition for a hydrogen tank liner that prevents deterioration of excellent tensile elongation properties and mechanical properties even under low temperature conditions (e.g., -40 °C), and a product prepared by the same.

[Technical Solution]

In order to achieve the above object, the polyamide resin composition according to an embodiment satisfies the following components and conditions:
a polyamide resin composition for a hydrogen tank liner including (a) a base resin including a first polyamide and a second polyamide, (b) an impact resistant material, (c) an antioxidant and (d) a release agent, wherein the first polyamide is an aliphatic polyamide, the second polyamide is an aliphatic polyamide having more carbon atoms per amide group in a polyamide repeating unit than the first polyamide, and a CR value derived from Equation 1 is 1.5 to 2.5:

(Equation 1)

$$CR = \frac{\text{The number of carbon atoms per amide group in second polyamide repeating unit}}{\text{The number of carbon atoms per amide group in first polyamide repeating unit}}$$

In the above embodiment, the polyamide resin composition may include 17.6 to 42.9 parts by weight of the impact resistant material (b), 0.2 to 0.3 parts by weight of the antioxidant (c), and 0.4 to 0.5 parts by weight of the release agent (d), based on 100 parts by weight of the base resin (a).

In addition, in the base resin (a), a content of the first polyamide may be 57 to 88 wt% and a content of the second polyamide may be 12 to 43 wt%.

In addition, the first polyamide may be at least one selected from polyamide 6; polyamide 6,6; polyamide 4,6; polyamide 4,10; polyamide 5,10; polyamide 6,10; polyamide 6,12; polyamide 11; polyamide 1,6; polyamide 10,12; polyamide 12; and polyamide 12,12.

On the other hand, the second polyamide may be at least one selected from polyamide 6; polyamide 6,6; polyamide 4,6; polyamide 4,10; polyamide 5,10; polyamide 6,10; polyamide 6,12; polyamide 11; polyamide 1,6; polyamide 10,12; polyamide 12; and polyamide 12,12.

In the above embodiment, the impact resistant agent may be a polyolefin copolymer grafted with a maleic anhydride group, and the heat resistant agent may include at least one selected from a phenol-based heat resistant agent, an amine-based heat resistant agent, a phosphite-based heat resistant agent, and a mixture thereof.

In addition, the release agent may include at least one selected from ethylene bisstearamide-based, polyethylene-based, or ester-based release agent, and a mixture thereof.

According to another embodiment, a product prepared from the polyamide resin composition according to the embodiment is provided.

[Advantageous Effects]

Provided are a polyamide resin composition for a plastic hydrogen tank liner with improved tensile elongation while maintaining mechanical properties at low temperature (-40 °C), and a product prepared by the same by optimizing types and contents of the base resin, the impact resistant material, the antioxidant, and the release agent constituting the polyamide resin composition.

**[Description of the Drawings]**

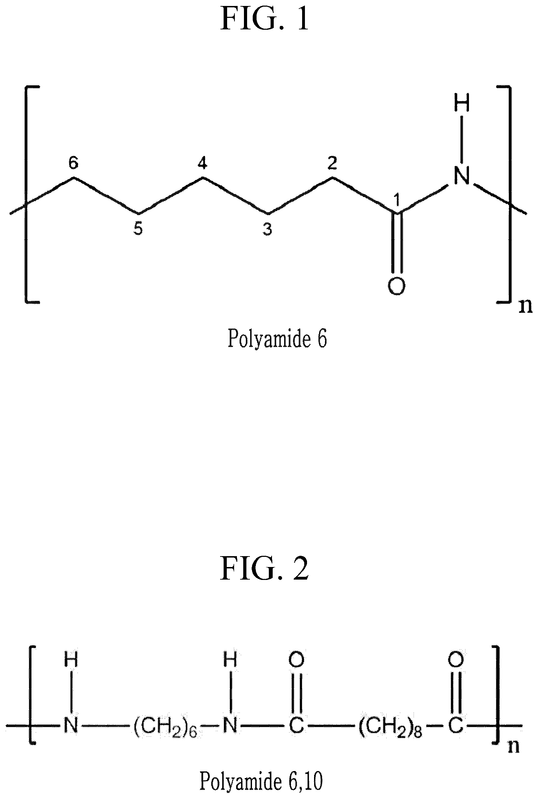

FIG. 1 is a repeating unit structure of polyamide 6.
FIG. 2 is a repeating unit structure of polyamide 6,10.

**[Mode for Invention]**

Hereinafter, prior to explaining the present invention in detail below, it should be understood that the terms used herein are only for describing specific embodiments and are not intended to limit the scope of the present invention, which is limited only by the appended claims. All technical and scientific terms used herein have the same meaning as commonly understood by a person of ordinary skill in the art unless otherwise mentioned.

Throughout this specification and claims, the terms "comprise", "comprises" and "comprising", unless otherwise mentioned, are referred to include a stated object, step, or group of objects, and groups of steps, and are not used in the sense of excluding any other object, step or group of objects or groups of steps.

On the other hand, various embodiments and examples of the present invention can be combined with any other embodiments unless clearly indicated to the contrary. Any feature indicated as being particularly desirable or advantageous may be combined with any other features and characteristics indicated as being particularly desirable or advantageous.

An embodiment of the present invention for solving the above problems provides a polyamide resin composition for a hydrogen tank liner including (a) a base resin including a first polyamide and a second polyamide; (b) an impact resistant agent; (c) a phenolic heat resistant agent; and (d) a release agent, wherein the first polyamide is an aliphatic polyamide, and the second polyamide is an aliphatic polyamide different from the first polyamide.

Hereinafter, the present invention will be described in more detail.

Polyamide Resin Composition

The polyamide resin composition includes a base resin including a first polyamide and a second polyamide, an impact resistant agent, a heat resistant agent, and a release agent.

Hereinafter, each component constituting the polyamide resin composition for preparing a product for a hydrogen tank liner according to an embodiment of the present invention will be described in detail.

(a) Base Resin

The base resin (a) may include a first polyamide and a second polyamide. The first polyamide and the second polyamide may each independently have an average degree of polymerization (DPw) of 200 to 15,000. In the polyamide resin composition according to an embodiment, the base resin may be a copolymer of the first polyamide and the second polyamide, or may be a mixture including the first polyamide and the second polyamide.

In the polyamide resin composition according to an embodiment, when the first polyamide and the second polyamide are included as the base resin, a product prepared from the polyamide resin composition has superior low-temperature tensile elongation characteristics to those of the prior art.

(a-1) First Polyamide

The first polyamide in the base resin may be an aliphatic polyamide, and examples thereof may include polyamide 6; polyamide 6,6; polyamide 4,6; polyamide 4,10; polyamide 5,10; polyamide 6,10; polyamide 6,12; polyamide 11; polyamide 1,6; polyamide 10,12; polyamide 12; and polyamide 12,12. More specifically, the first polyamide may be polyamide 6 and/or polyamide 6,6.

The first polyamide may have a relative viscosity of 2.0 to 3.5 when measured by adding 1 g of the first polyamide resin to 10 ml of 96% sulfuric acid at 20 °C. If the relative viscosity is less than 2.0, mechanical rigidity, dimensional stability, and impact resistance may be deteriorated, and if the relative viscosity exceeds 3.5, fluidity of the resin becomes inferior, resulting in surface defects and non-molding due to unstable dispersion of the impact resistant agent.

The first polyamide may be 57 wt% to 88 wt% based on 100 wt% of the base resin including the second polyamide described further later. When the first polyamide is included in an amount of less than 57 wt%, problems such as inferior kneading between the impact resistant agent and the base resin or a decrease in mechanical strength may occur during extrusion, and when the second polyamide may be included in an amount of greater than 88 wt%, it may be difficult to secure low-temperature tensile elongation of the polyamide resin composition due to a low content of the second polyamide.

(a-2) Second Polyamide

The second polyamide may be an aliphatic polyamide, and is a polyamide different from the first polyamide. Furthermore, the second polyamide is a polyamide having more carbon atoms per amide group in the polyamide repeating unit than the first polyamide.

For example, when the first polyamide is polyamide 6 (PA 6), the second polyamide may be polyamide 10,12 (PA10,12).

Specific examples of the second polyamide may include polyamide 6; polyamide 6,6; polyamide 4,6; polyamide 4,10; polyamide 5,10; polyamide 6,10; polyamide 6,12; polyamide 11; polyamide 1,6; polyamide 10,12; polyamide 12 and polyamide 12,12. More specifically, the second polyamide may be at least one selected from polyamide 11; polyamide 12; polyamide 10,12; and polyamide 12,12.

The second polyamide may have a relative viscosity of 2.0 to 3.3 when measured by adding 1 g of the second polyamide resin to 10 ml of 96% sulfuric acid at 20 °C. If the relative viscosity is less than 2.0, mechanical rigidity, dimensional stability, and impact resistance may be deteriorated, and if the relative viscosity exceeds 3.3, fluidity of the resin becomes inferior, resulting in defects such as surface exposure and non-molding due to fillers.

The content of the second polyamide is preferably 12 wt% to 43 wt% based on 100 wt% of the base resin including the first polyamide. When the content of the second polyamide is less than 12 wt%, it may be difficult to secure low-temperature tensile elongation of the polyamide resin composition according to an embodiment of the present invention, and when the content of the second polyamide exceeds 43 wt%, during the processing of products, there may be problems in that materials are not kneaded, or mechanical strength or thermal characteristics are lowered.

Relationship Between First Polyamide and Second Polyamide - CR value

In the polyamide resin composition according to an embodiment of the present invention, the first polyamide and the second polyamide included in the base resin may each independently be an aliphatic polyamide, and the first polyamide and the second polyamide are polyamide resins of different types.

In this case, the second polyamide is a polyamide having more carbon atoms per amide group in the repeating unit than the first polyamide. For example, when the first polyamide is polyamide 6, the second polyamide may be polyamide 10,12. In this case, a CR value representing a ratio of carbon atoms per amide group in a repeating unit of polyamide may be 1.5 to 2.5. The CR value may be represented by Equation 1.

[Equation 1]

$$CR = \frac{\text{The number of carbon atoms per amide group in second polyamide repeating unit}}{\text{The number of carbon atoms per amide group in first polyamide repeating unit}}$$

The CR value is a factor devised to derive properties of a base resin suitable for a hydrogen tank liner in relation to a mixed or copolymerized heterogeneous polyamide. The present inventors have recognized that in order to maintain the mechanical properties at a low temperature (-40 °C) and satisfy the tensile elongation requirements among the physical properties required of a hydrogen tank liner by using heterogeneous polyamide, it is desirable to form advantageous conditions for mutual attraction in a structure of the polyamide resin and then, have concluded that in the polyamide structure, it is necessary to significantly set a difference in the number of carbons in a polyamide repeating unit, which determines a structure and a three-dimensional shape of the molecular chain.

In the polyamide structure, the number of carbons in the polyamide repeating unit means the number of carbons per amid group in the repeating unit, for example, polyamide 6 may have 6 carbons per amide group in the polyamide repeating unit, and polyamide 10,12 may have 11 carbons per amide group in the polyamide repeating unit. Accordingly, when the first polyamide is polyamide 6, and the second polyamide is polyamide 10,12, the CR value is 1.83.

In the polyamide structure, further explaining the number of carbons in the repeating unit, the number of carbons in the repeating unit means the number of carbons per amide group in the repeating unit, which can be obtained as follows.

$$\text{Number of carbons in repeating unit} = (\text{total number of carbons in repeating unit}) / (\text{amide groups in repeating unit})$$

For example, as for polyamide 6, since the total number of carbons in the repeating unit is 6, and the number of the amide group in the repeating unit is 1, the number of carbons in the repeating unit is 6. As for polyamide 6,10, since the total number of carbons in the repeating unit is 16, and the number of the amide group in the repeating unit is 2, the number of carbons in the repeating unit is 8. Accordingly, when the first polyamide is polyamide 6, and the second polyamide is polyamide 6,10, the CR value is 1.33. For ease of understanding, polyamide 6 and polyamide 6,10 are shown in the drawings.

When the CR value is less than 1.5, there is a problem of lowering elongation of a product at room temperature and a low temperature and also, deteriorating impact strength. On the contrary, when the CR value is greater than 2.5, it is impossible to process due to compatibility problems between the first polyamide and the second polyamide, and due to insufficient physical/chemical bonding of the first polyamide and the second polyamide, mechanical strength may lower than required physical properties, or surface defects may be generated.

(b) Impact resistant material

An impact resistant material (b) increases impact resistance of a hydrogen tank liner product and prevents it from cracking against external impacts. The impact resistant material (b) may be at least one selected from a polyolefin copolymer grafted with a maleic anhydride group and a mixture thereof and specifically, an ethylene octene copolymer grafted with a maleic anhydride group.

The maleic anhydride group according to the present invention serves as an impact resistant agent and may reinforce impact strength when applied to products.

The maleic anhydride group, which is a reactive group introduced to improve compatibility with the polyamide resin, may increase viscosity of the polyamide resin composition due to a reaction of the amine ($-NH_2$) end group of the polyamide resin and the maleic anhydride group, so that the polyamide resin composition may exhibit a suitable viscosity for extrusion molding.

In order to exhibit the suitable viscosity for extrusion molding, in the ethylene octene copolymer to which the maleic anhydride group is grafted, the maleic anhydride group may be grafted in an amount of 0.5 wt% to 15 wt%.

The impact resistant material (b) may be included in an amount of 17.6 parts by weight to 42.9 parts by weight based on 100 parts by weight of the base resin (a). When the impact resistant material (b) is included in an amount of less than 17.6 parts by weight, it is difficult to improve the impact modification effect and the elongation, but when included in an amount of greater than 42.9 parts by weight, there may be problems of deteriorating the mechanical strength such as tensile strength and the like.

(c) Antioxidant

The heat-resistant agent (c) may include at least one selected from phenol-based, amine-based, phosphorus-based heat-resistant agents, and a mixture thereof. The antioxidant prevents deterioration of physical properties due to heat that may be generated during the preparation of a product of a hydrogen tank liner, and exhibits a synergistic effect in enhancing heat resistance.

The heat resistant agent (c) may be 0.2 to 1 part by weight based on 100 parts by weight of the base resin (a). If the antioxidant (c) is less than 0.2 parts by weight, an effect of improving heat resistance may be insufficient, whereas if it exceeds 1 part by weight, problems such as surface condition defects may occur due to gas generation during injection processing.

(d) Release agent

The release agent (d) may include at least one selected from ethylene bisstearamide-based, polyethylene-based, ester-based release agents, and a mixture thereof.

The release agent (d) may be included in 0.3 to 0.5 parts by weight based on 100 parts by weight of the base resin (a), and if it is included in less than 0.3 parts by weight, release properties may be deteriorated during molding, and if it exceeds 0.5 parts by weight, during extrusion and injection processing, problems may occur due to slipping and gas generation.

In addition, the polyamide resin composition may optionally include additives such as lubricants, carbon fibers, colorants, nucleating agents, plasticizers, and lubricants within a range that does not impair the effects of the present invention.

The polyamide resin composition according to an embodiment of the present invention may be prepared in a known method, but the aforementioned materials as each constituent material thereof are used in a specific amount to obtain a polyamide resin composition having excellent physical properties, which may be prepared by mixing the components of the present invention and melt-extruding the mixture in an extruder into a pellet.

Hereinafter, the present invention will be described in more detail through examples. These examples are only for exemplifying the present invention, and it will be apparent to those skilled in the art that the scope of the present invention is not to be construed as being limited by these examples.

**Examples 1 to 9 and Comparative Examples 1 to 3**

Based on components and contents shown in Table 1, each resin composition was melt-kneaded in a twin-screw extruder, heated to 255 °C and formed into a chip, dried at 85 °C for 6 hours by using a dehumidifying drier, and molded at the same temperature as the melt-kneading by using a heated screw-type extruder into a specimen meeting each property evaluation condition.

(Table 1)

| | Base resin | | | B (parts by weight) | C (parts by weight) | D (parts by weight) |
|---|---|---|---|---|---|---|
| | PA (a-1) (wt%) | PA (a-2) (wt%) | PA (a-3) (wt%) | | | |
| Ex. 1 | 88 | 12 | - | 17.6 | 0.2 | 0.4 |
| Ex. 2 | 71 | 29 | - | 17.6 | 0.2 | 0.4 |
| Ex. 3 | 69 | 31 | - | 25 | 0.3 | 0.4 |
| Ex. 4 | 81 | 19 | - | 25 | 0.3 | 0.4 |
| Ex. 5 | 67 | 33 | - | 33.3 | 0.3 | 0.4 |
| Ex. 6 | 60 | 40 | - | 33.3 | 0.3 | 0.4 |
| Ex. 7 | 57 | 43 | - | 42.9 | 0.3 | 0.4 |
| Ex. 8 | 84 | 16 | - | 5.3 | 0.22 | 0.3 |
| Ex. 9 | 62 | 38 | - | 53.8 | 0.3 | 0.5 |
| Comp. Ex. 1 | 80 | 0 | - | 25 | 0.3 | 0.4 |

(continued)

| | Base resin | | | B (parts by weight) | C (parts by weight) | D (parts by weight) |
|---|---|---|---|---|---|---|
| | PA (a-1) (wt%) | PA (a-2) (wt%) | PA (a-3) (wt%) | | | |
| Comp. Ex. 2 | 90 | 10 | - | 0 | 0.2 | 0.3 |
| Comp. Ex. 3 | 67 | - | 33 | 33.3 | 0.3 | 0.4 |

At this time, the components used in the polyamide resin compositions of examples and comparative examples are as follows.

PA (a-1): Domamid 33 from DOMO Chemical
PA(a-2): PA 10,12 from Shandong Dongchen
PA(a-3): PA 5,10 from Cathay
B: FUSABOND N493 of Dupont
C: SONGNOX 1010 (hindered phenolic heat retardant) of Songwon industry
D: HI-LUDE (ethylene bisstearamide based) of Shinwon Chemical

**Property Evaluation**

1) Tensile strength: Tensile strength was measured by UTM under the condition of 50 mm/min according to ISO 527.
2) Tensile elongation: Tensile elongation was measured by UTM under the condition of 50 mm/min according to ISO 527.
3) Impact strength: IZOD notched impact strength was measured using a 5.5J hammer according to ISO 180.
4) Measurement of physical properties at low temperature (-40 °C): After aging the specimens for 4 hours at low temperature (-40 °C), the physical properties were measured in a chamber where a low-temperature (-40 °C) atmosphere was maintained with liquid nitrogen.

(Table 2)

| | Room temperature (23 °C) | | | Low temperature (-40 °C) | | |
|---|---|---|---|---|---|---|
| | Tensile strength (MPa) | Tensile elongation (%) | Impact strength (kJ/m$^2$) | Tensile strength (MPa) | Tensile elongation (%) | Impact strength (kJ/m$^2$) |
| Ex. 1 | 54 | 483 | 82 | 79 | 34 | 18 |
| Ex. 2 | 59 | 387 | 99 | 67 | 63 | 21 |
| Ex. 3 | 52 | 266 | 103 | 65 | 81 | 23 |
| Ex. 4 | 49 | 233 | 97 | 68 | 51 | 25 |
| Ex. 5 | 53 | 277 | 103 | 60 | 96 | 67 |
| Ex. 6 | 47 | 307 | 106 | 56 | 108 | 76 |
| Ex. 7 | 42 | 169 | 99 | 54 | 82 | 95 |
| Ex. 8 | 61 | 147 | 23 | 98 | 19 | 9 |
| Ex. 9 | 35 | 148 | 96.8 | 55 | 115 | 110.3 |
| Comp. Ex. 1 | 48 | 150 | 55.7 | 76 | 17 | 18.5 |

(continued)

| | Room temperature (23 °C) | | | Low temperature (-40 °C) | | |
|---|---|---|---|---|---|---|
| | Tensile strength (MPa) | Tensile elongation (%) | Impact strength (kJ/m$^2$) | Tensile strength (MPa) | Tensile elongation (%) | Impact strength (kJ/m$^2$) |
| Comp. Ex. 2 | 74 | 97 | 6.6 | 111 | 10 | 3 |
| Comp. Ex. 3 | 51 | 35 | 50 | 81 | 20 | 13 |

As seen from Table 2, Examples 1 to 9 exhibited excellent tensile elongation and tensile strength at a low temperature (-40 °C) and also, excellent impact strength. On the other hand, Comparative Example 1, whose composition included no second polyamide, exhibited no excellent low-temperature elongation at a low temperature.

Comparative Example 2, whose composition included the second polyamide but no impact resistant material (b), exhibited weak tensile elongation at a low temperature (-40 °C).

Comparative Example 3, whose CR was 1.25, which is smaller than 1.5, exhibited weak tensile elongation at room temperature (23 °C) and low the temperature (-40 °C).

**Claims**

1.  A polyamide resin composition for a hydrogen tank liner, comprising

    (a) a base resin including a first polyamide and a second polyamide,
    (b) an impact resistant material,
    (c) an antioxidant and
    (d) a release agent,
    wherein the first polyamide is an aliphatic polyamide,
    the second polyamide is an aliphatic polyamide having more carbon atoms per amide group in a polyamide repeating unit than the first polyamide, and
    a CR value derived from Equation 1 is 1.5 to 2.5:

    [Equation 1]

    $$CR = \frac{\text{The number of carbon atoms per amide group in second polyamide repeating unit}}{\text{The number of carbon atoms per amide group in first polyamide repeating unit}}$$

2.  The polyamide resin composition for a hydrogen tank liner of claim 1, wherein

    the polyamide resin composition includes, based on 100 parts by weight of the base resin (a),
    17.6 to 42.9 parts by weight of the impact resistant material (b),
    0.2 to 0.3 parts by weight of the antioxidant (c), and
    0.4 to 0.5 parts by weight of the release agent (d).

3.  The polyamide resin composition for a hydrogen tank liner of claim 1, wherein in the base resin (a), a content of the first polyamide is 57 to 88 wt% and a content of the second polyamide is 12 to 43 wt%.

4.  The polyamide resin composition for a hydrogen tank liner of claim 1, wherein the first polyamide is at least one selected from polyamide 6; polyamide 6,6; polyamide 4,6; polyamide 4,10; polyamide 5,10; polyamide 6,10; polyamide 6,12; polyamide 11; polyamide 1,6; polyamide 10,12; polyamide 12; and polyamide 12,12.

5.  The polyamide resin composition for a hydrogen tank liner of claim 1, wherein the second polyamide is at least one selected from polyamide 6; polyamide 6,6; polyamide 4,6; polyamide 4,10; polyamide 5,10; polyamide 6,10; polyamide 6,12; polyamide 11; polyamide 1,6; polyamide 10,12; polyamide 12; and polyamide 12,12.

6. The polyamide resin composition for a hydrogen tank liner of claim 1, wherein the impact resistant material is a polyolefin copolymer grafted with a maleic anhydride group.

7. The polyamide resin composition for a hydrogen tank liner of claim 1, wherein the antioxidant includes at least one selected from a phenol-based heat resistant agent, an amine-based antioxidant, a phosphite-based antioxidant, and a mixture thereof.

8. The polyamide resin composition for a hydrogen tank liner of claim 1, wherein the release agent includes at least one selected from an ethylene bisstearamide-based, polyethylene-based, or ester-based release agent, and a mixture thereof.

9. A product prepared from the polyamide resin composition of any one of claim 1 to claim 8.

10. The product of claim 9, wherein
the product is a hydrogen tank liner.

# FIG. 1

Polyamide 6

# FIG. 2

Polyamide 6,10

# INTERNATIONAL SEARCH REPORT

International application No.

**PCT/KR2021/018809**

| A. | CLASSIFICATION OF SUBJECT MATTER |
|---|---|

**C08L 77/00**(2006.01)i; **C08L 23/26**(2006.01)i; **C08K 5/00**(2006.01)i; **F17C 1/16**(2006.01)i

According to International Patent Classification (IPC) or to both national classification and IPC

| B. | FIELDS SEARCHED |
|---|---|

Minimum documentation searched (classification system followed by classification symbols)

C08L 77/00(2006.01); B32B 1/02(2006.01); C08K 3/04(2006.01); C08K 5/00(2006.01); C08K 7/14(2006.01); C08L 77/02(2006.01); F17C 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수소 탱크 라이너(hydrogen tank liner), 폴리아미드 수지(polyamide resin), 내충격제(impact resisting agent), 내열제(heat resisting agent), 이형제(releasing agent)

| C. | DOCUMENTS CONSIDERED TO BE RELEVANT |
|---|---|

| Category* | Citation of document, with indication, where appropriate, of the relevant passages | Relevant to claim No. |
|---|---|---|
| DX | JP 2009-191871 A (UBE IND. LTD. et al.) 27 August 2009 (2009-08-27)<br>  See claims 1-5; and paragraphs [0021]-[0034]. | 1-6,9-10 |
| DY | | 7-8 |
| Y | KR 10-2019-0036246 A (KOLON PLASTICS, INC.) 04 April 2019 (2019-04-04)<br>  See paragraphs [0022]-[0027]. | 7-8 |
| A | KR 10-2018-0063908 A (DSM IP ASSETS B.V.) 12 June 2018 (2018-06-12)<br>  See entire document. | 1-10 |
| A | KR 10-2017-0122641 A (TORAY INDUSTRIES, INC.) 06 November 2017 (2017-11-06)<br>  See entire document. | 1-10 |
| A | KR 10-2012-0089912 A (CHEIL INDUSTRIES INC.) 16 August 2012 (2012-08-16)<br>  See entire document. | 1-10 |

☐ Further documents are listed in the continuation of Box C.        ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 March 2022** | **28 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

| International application No. |
| --- |
| **PCT/KR2021/018809** |

| Patent document cited in search report | | | Publication date (day/month/year) | Patent family member(s) | | | Publication date (day/month/year) |
| --- | --- | --- | --- | --- | --- | --- | --- |
| JP | 2009-191871 | A | 27 August 2009 | JP | 4588078 | B2 | 24 November 2010 |
| | | | | US | 2009-0203845 | A1 | 13 August 2009 |
| | | | | US | 8053523 | B2 | 08 November 2011 |
| KR | 10-2019-0036246 | A | 04 April 2019 | | None | | |
| KR | 10-2018-0063908 | A | 12 June 2018 | CN | 103261325 | A | 21 August 2013 |
| | | | | CN | 103261325 | B | 11 May 2016 |
| | | | | EP | 2649130 | A2 | 16 October 2013 |
| | | | | EP | 2649130 | B1 | 23 August 2017 |
| | | | | JP | 2014-501818 | A | 23 January 2014 |
| | | | | JP | 2017-201213 | A | 09 November 2017 |
| | | | | JP | 6209758 | B2 | 11 October 2017 |
| | | | | KR | 10-2013-0102630 | A | 17 September 2013 |
| | | | | KR | 10-2015-0095953 | A | 21 August 2015 |
| | | | | KR | 10-2189936 | B1 | 14 December 2020 |
| | | | | US | 2014-0034654 | A1 | 06 February 2014 |
| | | | | US | 9470366 | B2 | 18 October 2016 |
| | | | | WO | 2012-076677 | A2 | 14 June 2012 |
| | | | | WO | 2012-076677 | A3 | 07 September 2012 |
| KR | 10-2017-0122641 | A | 06 November 2017 | CN | 106255726 | A | 21 December 2016 |
| | | | | CN | 106255726 | B | 19 February 2019 |
| | | | | EP | 3112421 | A1 | 04 January 2017 |
| | | | | EP | 3112421 | A4 | 29 March 2017 |
| | | | | JP | 5935956 | B1 | 15 June 2016 |
| | | | | KR | 10-2292160 | B1 | 24 August 2021 |
| | | | | US | 2017-0029620 | A1 | 02 February 2017 |
| | | | | US | 9850380 | B2 | 26 December 2017 |
| | | | | WO | 2016-136025 | A1 | 01 September 2016 |
| | | | | WO | 2016-136025 | A1 | 27 April 2017 |
| KR | 10-2012-0089912 | A | 16 August 2012 | CN | 102585489 | A | 18 July 2012 |
| | | | | KR | 10-1466278 | B1 | 27 November 2014 |
| | | | | US | 2012-0157606 | A1 | 21 June 2012 |
| | | | | US | 8618209 | B2 | 31 December 2013 |

Form PCT/ISA/210 (patent family annex) (July 2019)

**EP 4 269 502 A1**

## REFERENCES CITED IN THE DESCRIPTION

### Patent documents cited in the description

- JP 2009191871 A